# EUROPÄISCHE PATENTSCHRIFT

(11) **EP 3 345 841 B1**
(45) Veröffentlichungstag und Bekanntmachung des Hinweises auf die Patenterteilung: **09.10.2019**
(21) Anmeldenummer: 17208322.2
(22) Anmeldetag: 19.12.2017
(51) Int. Cl.: B64G 1/68, B64G 1/66, G01V 9/00

(54) **ERFASSUNGSEINRICHTUNG**
DETECTION DEVICE
DISPOSITIF DE DÉTECTION

(30) Priorität: 29.12.2016 DE 102016125874
(43) Veröffentlichungstag der Anmeldung: 11.07.2018
(73) Patentinhaber: Deutsches Zentrum für Luft- und Raumfahrt e.V., 51147 Köln (DE)
(72) Erfinder: Hauer, Lars-Christian, 28355 Bremen (DE); Fexer, Sebastian, 28717 Bremen (DE)
(74) Vertreter: FARAGO Patentanwälte

(56) Entgegenhaltungen:
- JP-A- H11 227 699
- US-A- 5 608 414
- US-A1- 2012 318 925
- KASSEL P C ET AL: "METAL-OXIDE SILICON CAPACITOR DETECTORS FOR MEASURING MICROMETEROROID AND SPACE-DEBRIS FLUX", JOURNAL OF SPACECRAFT AND ROCKETS, AMERICAN INSTITUTE OF AERONAUTICS AND ASTRONAUTICS,REASTON,VA, US, Bd. 32, Nr. 4, 1. Juli 1995 (1995-07-01), Seiten 710-718, XP000523499, ISSN: 0022-4650
- BAUER WALDEMAR ET AL: "Development of in-situ Space Debris Detector", ADVANCES IN SPACE RESEARCH, ELSEVIER, AMSTERDAM, NL, Bd. 54, Nr. 9, 7. August 2014 (2014-08-07) , Seiten 1858-1869, XP029049115, ISSN: 0273-1177, DOI: 10.1016/J.ASR.2014.07.035

## Beschreibung

Die Erfindung betrifft eine Erfassungseinrichtung für Weltraummüll, insbesondere eine Sende- und Empfangsantenne, die als Erfassungseinrichtung für Weltraummüll nutzbar ist.

Seit Beginn der operationellen Raumfahrt mit dem Start des ersten künstlichen Erdsatelliten Sputnik 1 im Oktober 1957 wurden etliche Raketen, Satelliten, Sonden und Raumfähren in die Erdumlaufbahn geschossen. Bei jedem einzelnen Start wird Müll produziert, z.B. durch missionsbedingte Weltraummüll-Objekte, wobei der Müll in der Erdumlaufbahn auf der Höhe verbleibt, in der er mit der dort vorherrschenden Relativgeschwindigkeit fliegt. Dieser Weltraummüll gefährdet in allen Erdumlaufbahnen die Raumfahrt. Deshalb ist eine Erfassung mit allen möglichen Methoden notwendig. Am 10. Februar 2009 sind zum ersten Mal in der Geschichte der Menschheit zwei Satelliten in der Erdumlaufbahn kollidiert. Bei der Kollision handelte es sich um die beiden Kommunikationssatelliten Iridium 33 sowie den russischen Kosmos 2251, die sich über Sibirien in einer Höhe von 789 km über der Erdoberfläche befanden. Durch den gegenseitigen Aufprall, welcher mit einer Relativgeschwindigkeit von 11,6 km/s (= 41.760 km/h) erfolgte, resultierte ein Trümmerfeld, bestehend aus einer Vielzahl neu erzeugter Weltraummüll-Objekte, die größtenteils auch heute noch als Weltraummüll die Erde umkreisen.

Teile mit einer Größe geringer als 5 cm können im Low Earth Orbit (LEO) vom Boden aus kaum geortet werden. Kollisionen von Satelliten mit Weltraummüll-Objekten mit einem Durchmesser von mehr als ca. 1 cm Durchmesser führen in der Regel zu einem vollständigen Verlust der Mission. Die Anzahl der Weltraummüll-Objekte in den Umlaufbahnen nimmt mit abnehmendem Durchmesser exponentiell zu.

Für eine Vermessung der Weltraummüll-Objekte im Weltraum gibt es unterschiedliche Ansätze. Diese lassen sich in zerstörende und zerstörungsfreie Verfahren einteilen. Zerstörungsfreie Verfahren zeichnen sich dadurch aus, dass eine Fernerkundung des Weltraummüll-Objektes mittels eines Meßgerätes (aktive Interaktion) erfolgt. Beispielhaft können hier bodengestützte Radar- und Teleskopanlagen genannt werden, die unter anderem für eine Bahnvermessung der Weltraummüll-Objekte und somit zur Frühwarnungen eingesetzt werden. Mittels bodengestützten Anlagen lassen sich Weltraummüll-Objekte mit einem Durchmesser von ca. 10 cm im LEO und ca. 1 m im geostationären Orbit (GEO) operationell vermessen. Kleinere Weltraummüll-Objekte, z.B. mit 5 cm Durchmesser im LEO oder mit 10 cm Durchmesser im GEO, sind sporadisch detektierbar. Weltraummüll-Objekte mit einem Durchmesser kleiner 2 cm sind im LEO nicht nachweisbar. Die Erfassung von Weltraummüll mittels bodengestützter Radar- und Teleskopanlagen ist derzeit die meistgenutzte Methode. Radar- und Teleskopanlagen für die Detektion von Weltraummüll können sowohl bodengestützt als auch weltraumgestützt sein. Aktuell sind die meisten Geräte für die Detektion von Weltraummüll jedoch bodengestützt.

Bei zerstörenden Verfahren schlägt ein zu messendes Weltraummüll-Objekt auf das Meßgerät "gewollt" ein. Zerstörende Verfahren fungieren als "In-Situ"-Meßinstrumente direkt im Orbit und liefern Meßwerte bezüglich kleiner Weltraummüll-Objekte (Durchmesser im Bereich von µm bis cm), die mittels Radar- und Teleskopanlagen nicht erfaßt werden können. Beispielhaft kann hier das am DLR-Bremen entwickelte SOLID-System genannt werden, dass die Subsysteme eines Satelliten (Solarpaneele und Lageregelungssystem) nutzt. Eine Zusammenfassung existierender In-Situ-Detektoren kann z.B. der Arbeit "Bauer, Waldemar, Space-Debris-Detektion zur Validierung von Simulations-Modellen, DLR-Forschungsbericht, 2015-08" entnommen werden. Weltraummüll-Objekte mit einem Durchmesser von ca. 1 cm sind für unbemannte Satelliten kritisch, da diese Weltraummüll-Objekte eine Mission im Falle einer Kollision mit hoher Wahrscheinlichkeit beenden. Kleinere Weltraummüll-Objekte im Millimeter-Bereich können eine Mission einschränken. Diese Weltraummüll-Objekte können die Wandung eines Satelliten durchschlagen und verwundbare Komponenten im Inneren eines Satelliten beschädigen. Weltraummüll-Objekte im Bereich µm sind beispielsweise für empfindliche Instrumente (z.B. optische Teleskope) kritisch.

Die europäische Offenlegungsschrift EP 2 236 422 A1 offenbart eine Erfassungsvorrichtung für einen im Weltraum fliegenden Gegenstand, die ein Erfassungsplattenelement umfasst, das in einer vorbestimmten Anordnungsteilung mehrere leitfähige Erfassungsleitungen auf einer nicht-leitfähigen Dünnschicht hält, die in einer Weltraumumgebung freigelegt werden kann. Weiterhin umfasst die Erfassungsvorrichtung eine Erfassungsschaltung, die mit jeder Erfassungsleitung verbunden ist, wobei eine Erfassung des im Weltraum fliegenden Gegenstandes, der mit dem Erfassungsplattenelement zusammengestoßen ist, durch die Erfassungsschaltung ermöglicht wird, wenn eine Erfassungsleitung auf dem Erfassungsplattenelement durch einen Zusammenstoß mit einem im Weltraum fliegenden Gegenstand unterbrochen wird.

Aus der US-amerikanischen Offenlegungsschrift US 2012 / 0318 925 A1 ist ein Verfahren und System zur multidimensionalen Detektion einer Beschädigung einer aufblasbaren Raumplattform bekannt. Die Raumplattform weist eine äußere Struktur auf, die eine Mehrzahl von Schichten aufweist, wobei die Schichten abwechselnd Detektions- und Isolationsschichten bilden und durch eine dreidimensionale leitende Gitterstruktur miteinander verbunden sind. Die Detektionsschichten sind elektrisch leitend ausgebildet. Die Detektion einer Beschädigung basiert auf einer Änderung von durch eine Beschädigung einer oder mehreren Detektionsschicht oder Detektionsschichten oder der Gitterstruktur hervorgerufenen elektrischen Eigenschaften, wobei ein Kontrollgerät vorgesehen ist, dass dazu ausgebildet ist, eine oder mehrere Schichten oder Teile der Gitterstruktur zu deaktivieren.

Aus der US-amerikanischen Offenlegungsschrift US 2012 / 0188078 A1 ist ein Schadenserkennungs- und -sanierungssystem für ein Objekt bekannt. Zur Schadenserkennung weist das Schadenserkennungssystem eine erste Schicht auf, die elektrisch leitfähige Leiter auf einem nichtleitenden Substrat aufweist, wobei durch die elektrisch leitfähigen Leiter ein elektromagnetisches Signal von einem Eingangskopplungspunkt zu einem Ausgangskopplungspunkt leitbar ist. Ein Schaden wird durch den Vergleich des elektromagnetischen Signals von dem Eingangskopplungspunkt zu dem Ausgangskopplungspunkt erkannt.

Aus der japanischen Offenlegungsschrift JP 2012 - 116349 A ist ebenfalls ein Schadenserkennungssystem für ein Objekt bekannt. Auch hier sind elektrische Leiter vorhanden, durch die ein elektromagnetisches Signal leitbar ist. Ein Schaden wird erkannt, wenn die Durchleitung des Signals unterbrochen ist.

Aus der internationalen Anmeldung 2016 / 164 758 A1 ist schließlich ein phasengesteuertes Array-Antennensystem bekannt. Mit dem Array-Antennensystem kann ein Modell der Ionosphäre erzeugt werden, wobei Puls und Amplitude der inkohärenten Streuung zu der Profilelektronenzahldichte der Ionosphäre bestimmt wird.

Aus der XP000523499 ist eine als Kondensator wirkende Sandwichstruktur zum Erfassen von Weltraummüll bekannt.

Allen bekannten System ist gemeinsam, dass sie hohe Kosten verursachen und größtenteils nicht in der Lage sind, kleinste Partikel zu erfassen. Heutige Vorhersagen basieren auf Simulations-Modellen, die kaum Meßwerte zur Validierung verwenden.

Aufgabe der Erfindung ist es, eine auf einem künstlichen Weltraumflugkörper installierbare Erfassungseinrichtung für die Erfassung von Weltraummüll-Objekten anzugeben, dass in der Lage ist, kleinste Partikel bis in den µm-Bereich zu erfassen, kostengünstig ist und keine zusätzliche Last einem im Weltraum fliegenden Objekts hinzufügt.

Erfindungsgemäß wird diese Aufgabe durch eine Erfassungseinrichtung mit den Merkmalen des unabhängigen Anspruches 1 gelöst. Vorteilhafte Weiterbildungen der Erfassungseinrichtung ergeben sich aus den Unteransprüchen 2 bis 7.

Eine erfindungsgemäße Erfassungseinrichtung weist mindestens eine Planarantenne auf, wobei unter Planarantenne jede flächige Antenne verstanden wird. Es ist nicht erforderlich, dass die flächige Antenne absolut eben ist. Auch werden im Wesentlichen flächige Antennen mit einer Oberflächenstruktur unter dem Begriff Planarantenne verstanden. Die Planarantenne weist an ihrer Oberfläche eine Sandwichstruktur aus zwei leitfähigen Schichten, die durch eine nicht leitfähige Schicht getrennt sind, auf, wobei an die zwei leitfähigen Schichten elektrische Spannungen anlegbar sind und zumindest die äußere leitfähige Schicht durch den Aufprall eines Weltraummüll-Objekts mechanisch veränderbar ist. In einer vorteilhaften Ausführungsform ist die äußere leitfähige Schicht der Planarantenne durch den Aufprall eines Weltraummüll-Objekts deformierbar. Durch die mechanischen Veränderung zumindest der äußeren leitfähigen Schicht verändert sich zumindest ein elektrischer Parameter der Planarantenne, wobei dieser Parameter messbar ist und aus dessen Veränderung auf das Auftreffen eines Weltraummüll-Objektes und auf die Größe des aufprallenden Weltraummüll-Objektes geschlossen werden kann.

Die Sandwichstruktur aus zwei leitfähigen Schichten, die durch eine nicht leitfähige Schicht getrennt sind, stellt einen Kondensator dar. Der sich ändernde elektrische Parameter kann beispielsweise die Kapazität des Kondensators sein. Durch die mechanischen Veränderung zumindest der äußeren leitfähigen Schicht ändert sich die Kapazität des Kondensators. Der sich ändernde elektrische Parameter kann beispielsweise auch die Impedanz der Planarantenne sein. Durch die mechanische Veränderung zumindest der äußeren leitfähigen Schicht ändert sich auch die Impedanz der Planarantenne.

Die als Kondensator wirkende Sandwichstruktur der Planarantenne kann mit einer Spule zu einem elektrischen Schwingkreis verbunden werden. Bei diesem Schwingkreis wird Energie zwischen dem magnetischen Feld der Spule und dem elektrischen Feld des Kondensators periodisch mit einer bestimmten Frequenz ausgetauscht, wodurch abwechselnd hohe Stromstärke oder hohe Spannung vorliegen. Wird ein solcher Schwingkreis durch einen Impuls periodisch angestoßen, dann führt er periodische erzwungene Schwingungen aus, deren Frequenz identisch mit der Erregerfrequenz ist. Dabei treten Resonanzerscheinungen auf. Die Resonanzerscheinungen können erfaßt werden und aus der Veränderung der erfassten Resonanzerscheinungen kann auf das Auftreffen eines Weltraummüll-Objekts und auf die Stärke des Aufpralls des Weltraummüll-Objekts auf die Planarantenne geschlossen werden. Trifft ein Weltraummüll-Objekt auf die Oberfläche der Planarantenne, so wird zumindest die oberste leitfähige Schicht der Sandwichstruktur mechanisch verändert, beispielsweise deformiert. Durch den damit veränderten Abstand der beiden als Elektroden dienenden leitfähigen Schichten der Sandwichstruktur ändert sich die Kapazität. Weiterhin ändert sich die Resonanzfrequenz des Schwingkreises. Aus der Größe dieser Änderungen lässt sich beispielsweise über eine inverse Fourieranalyse beispielsweise im Zeit- oder Frequenzbereich auf die Größe des auftreffenden Weltraummüll-Objekts schließen.

Alternativ oder zusätzlich kann auch die Impedanz der Planarantenne erfaßt werden. Durch die mechanische Veränderung, beispielsweise eine Deformation, zumindest der äußeren leitfähigen Schicht der Planarantenne ändert sich auch deren Impedanz. Aus der Veränderung der erfassten Impedanzen kann ebenfalls auf das Auftreffen eines Weltraummüll-Objekts und auf die Stärke des Aufpralls des Weltraummüll-Objekts auf die Planarantenne geschlossen werden.

Der Betrieb der mindestens einen Planarantenne kann zwischen den Funktionen Senden und Empfangen einerseits und der Detektion von Weltraummüll-Objekten andererseits umgeschaltet werden. Dadurch erfüllt die Planarantenne die beiden Funktionen Senden und Empfangen einerseits und der Detektion von Weltraummüll-Objekten andererseits. Eine eigene Erfassungseinrichtung für die Erfassung von Weltraummüll-Objekten ist nicht erforderlich, sondern die an Satelliten ohnehin vorhandene Planarantenne kann für die Erfassung von Weltraummüll-Objekten genutzt werden. Somit braucht keine zusätzliche Last an einem Satelliten angebracht werden, um Weltraummüll-Objekte zu erfassen. Die Erfassung ist somit kostengünstig möglich.

In einer vorteilhaften Ausführungsform weist die mindestens eine Planarantenne nur einen Port, also nur einen Ein- beziehungsweise Ausgang, auf. Beispielsweise kann die Planarantenne eine planare Patchantenne sein, die beispielsweise aus einer rechteckigen Metallfläche besteht. Diese Metallfläche kann als Resonator wirken.

Alternativ kann die mindestens eine Planarantenne mindestens zwei Ports aufweisen, wobei alle Ports bis auf einen mit einem Abschlusswiderstand terminiert sind. Beispielsweise kann die mindestens eine Planarantenne eine travelling-wave Antenne sein, bei der sich der die Funkwellen erzeugende Hochfrequenzstrom nur in einer Richtung durch die Antenne bewegt. Dabei sind in einer Ausführungsform mindestens zwei Ports mit einem Mess-/Sendesystem verbunden.

Es hat sich als vorteilhaft erwiesen, wenn die Erfassungseinrichtung mehrere Planarantennen aufweist, die als Array zusammengefasst sind. In einem aus einer Anzahl von Einzelstrahlern konstruierten Antennenarray überlagern sich die von den Einzelstrahlern abgestrahlten Felder und formen durch konstruktive Interferenz ein gemeinsames Antennendiagramm.

Mit der erfinderischen Erfassungseinrichtung können kleinste Partikel von wenigen µm von Weltraummüll-Objekten mit Hilfe von an Satelliten angebrachten Planarantennen detektiert werden, ohne dass die Hauptfunktionen dieser Antennen eingeschränkt wird. Mit der Erfassungseinrichtung ist es möglich, neben der eigentlichen Aufgabe der Antenne, Signale zu empfangen und zu senden, zusätzliche Erkenntnisse über Weltraummüll-Objekte zu gewinnen. Mit diesem "Dual-use"-Prinzip ist eine kostengünstige Forschung über auch kleinste Weltraummüll-Objekte realisierbar, ohne dass eine flächenintensive Primärnutzlast auf einem Satelliten oder Raumfahrzeug integriert werden muss.

Weitere Vorteile, Besonderheiten und zweckmäßige Weiterbildungen der Erfindung ergeben sich aus den Unteransprüchen und der nachfolgenden Darstellung eines bevorzugten Ausführungsbeispiels anhand der Abbildung.

Die Abbildung zeigt:

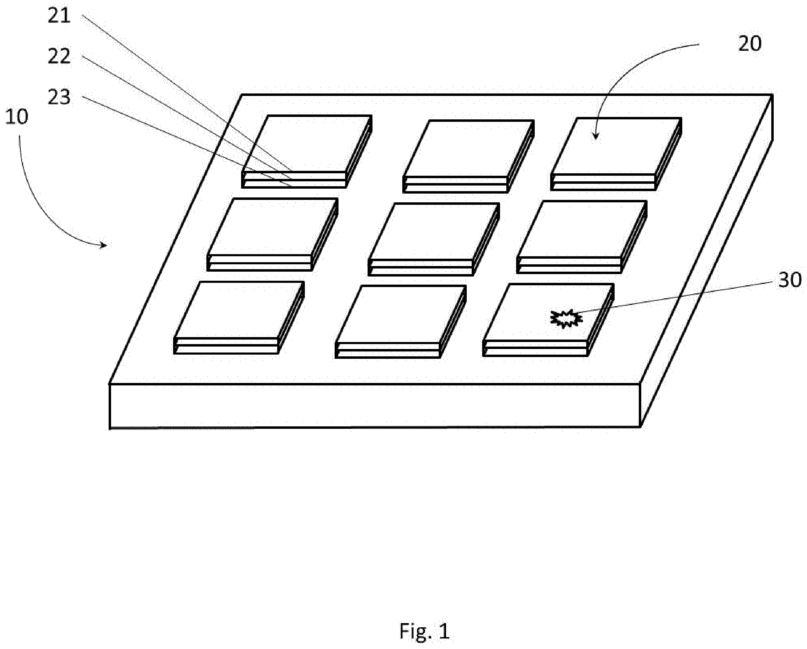

Fig. 1 Prinzipskizze einer Ausführungsform der erfindungsgemäßen Erfassungseinrichtung 10

Fig. 1 zeigt eine Prinzipskizze einer Ausführungsform der erfindungsgemäßen Erfassungseinrichtung 10. Die Erfassungseinrichtung 10 kann auf einem Satelliten installiert sein. Die Erfassungseinrichtung 10 weist neun Planarantennen 20 auf. Die Planarantennen 20 weisen an ihrer Oberfläche eine Sandwichstruktur aus zwei leitfähigen Schichten 21, 23, die durch eine nicht leitfähige Schicht 22 getrennt sind, auf, wobei an die zwei leitfähigen Schichten 21, 23 elektrische Spannungen anlegbar sind. Diese Sandwichstruktur stellt einen Kondensator dar. Trifft ein Weltraummüll-Objekt auf die äußere leitfähige Schicht 21, so wird diese an der Einschlagstelle 30 mechanisch deformiert. Durch die Deformation zumindest der äußeren leitfähigen Schicht 21 verändert sich zumindest ein elektrischer Parameter der Planarantenne 20. Der sich ändernde elektrische Parameter kann beispielsweise die Kapazität des Kondensators sein. Durch die mechanischen Veränderung zumindest der äußeren leitfähigen Schicht 21 ändert sich die Kapazität des Kondensators. Der sich ändernde elektrische Parameter kann beispielsweise auch die Impedanz der Planarantenne 20 sein. Durch die mechanische Veränderung zumindest der äußeren leitfähigen Schicht 21 ändert sich auch die Impedanz der Planarantenne 21.

Sowohl die sich durch die Einschlagstelle 30 veränderte Kapazität beziehungsweise die dadurch sich ändernden Resonanzeigenschaften der Planarantenne 20 als auch ihre sich durch die Einschlagstelle 30 veränderte Impedanz kann gemessen werden. Durch eine Auswertung dieser sich ändernden elektrischen Parameter kann auf das Vorhandensein einer Einschlagstelle 30 und ihre Größe geschlossen werden, wodurch ein Rückschluss auf das Auftreffen eines Weltraummüll-Objekts und dessen Größe möglich ist.

Der Betrieb der mindestens einen Planarantenne 20 kann zwischen den Funktionen Senden und Empfangen einerseits und der Detektion von Weltraummüll-Objekten andererseits umgeschaltet werden. Dadurch erfüllt die Planarantenne 20 die beiden Funktionen Senden und Empfangen einerseits und der Detektion von Weltraummüll-Objekten andererseits. Eine eigene Erfassungseinrichtung für die Erfassung von Weltraummüll-Objekten ist nicht erforderlich, sondern die an Satelliten ohnehin vorhandene Planarantenne 20 kann für die Erfassung von Weltraummüll-Objekten genutzt werden. Somit braucht keine zusätzliche Last an einem Satelliten angebracht werden, um Weltraummüll-Objekte zu erfassen. Die Erfassung ist somit kostengünstig möglich.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 10: Erfassungseinrichtung, Antennenarray
- 20: Planarantenne
- 21: äußere leitfähige Schicht
- 22: nicht leitfähige Schicht
- 23: innere leitfähige Schicht
- 30: Einschlagstelle

## Patentansprüche

1. Erfassungseinrichtung (10) für die Erfassung von Weltraummüll-Objekten im Weltraum, wobei der Aufprall eines Weltraummüll-Objekts auf der Erfassungseinrichtung (10) detektierbar ist, wobei die Erfassungseinrichtung (10) eine Sandwichstruktur aus zwei leitfähigen Schichten (21, 23), die durch eine nicht leitfähige Schicht (22) getrennt sind, aufweist, wobei an die zwei leitfähigen Schichten (21, 23) elektrische Spannungen anlegbar sind und zumindest die äußere leitfähige Schicht (21) durch den Aufprall eines Weltraummüll-Objekts mechanisch veränderbar ist, wobei sich durch die mechanische Veränderung zumindest der äußeren leitfähigen Schicht zumindest einer ihrer elektrischen Parameter verändert, wobei diese Veränderung messbar ist und wobei aus dieser Veränderung auf das Auftreffen eines Weltraummüll-Objekts schließbar ist, **dadurch gekennzeichnet, dass**
die Erfassungseinrichtung (10) mindestens eine Planarantenne (20) aufweist, wobei die Planarantenne (20) an ihrer Oberfläche die Sandwichstruktur aus zwei leitfähigen Schichten (21, 23), die durch die nicht leitfähige Schicht (22) getrennt sind, aufweist.

2. Erfassungseinrichtung (10) gemäß Anspruch 1,
**dadurch gekennzeichnet,**
**dass** zumindest die äußere leitfähige Schicht (21) durch den Aufprall eines Weltraummüll-Objekts deformierbar ist.

3. Erfassungseinrichtung (10) gemäß Anspruch 1 oder 2,
**dadurch gekennzeichnet,**
**dass** mindestens ein elektrischer Parameter mit der mechanischen Veränderung der äußeren leitfähigen Schicht (21) veränderbar ist.

4. Erfassungseinrichtung (10) gemäß einem der vorherigen Ansprüche,
**dadurch gekennzeichnet,**
**dass** die mindestens eine Planarantenne (20) nur einen Port aufweist.

5. Erfassungseinrichtung (10) gemäß einem der Ansprüche 1 bis 3,
**dadurch gekennzeichnet,**
**dass** die mindestens eine Planarantenne (20) mindestens zwei Ports aufweist, wobei alle Ports bis auf einen mit einem Abschlusswiderstand terminiert sind.

6. Erfassungseinrichtung (10) gemäß Anspruch 5,
**dadurch gekennzeichnet,**
**dass** mindestens zwei Ports mit einem Mess-/Sendesystem verbunden sind.

7. Erfassungseinrichtung (10) gemäß einem der vorherigen Ansprüche,
**dadurch gekennzeichnet,**
**dass** die Erfassungseinrichtung (10) mehrere Planarantennen (20) aufweist, wobei die mehreren Planarantennen (20) als Array zusammengefasst sind.

## Claims

1. Detection device (10) for the detection of space debris objects in space, wherein the impact of a space debris object is detectable on the detection device (10), wherein the detection device (10) has a sandwich structure of two conductive layers (21, 23) separated by a non-conductive layer (22), wherein electrical voltages can be applied to the two conductive layers (21, 23) and at least the outer conductive layer (21) is mechanically changeable by the impact of a space debris object, wherein by this mechanical change at least of the outer conductive layer at least one of its parameter is changeable, wherein this change is measurable and wherein taking this change the impact of a space debris object is detectable,
**characterized in that** the detection device (10) comprises at least one planar antenna (20), wherein the planar antenna (20) comprises on its surface the sandwich structure of two conductive layers (21, 23) separated by the non-conductive layer (22).

2. Detection device (10) according to claim 1,
**characterized in**
**that** at least the outer conductive layer (21) is deformable by the impact of a space debris object.

3. Detection device (10) according to claim 1 or 2,
**characterized in**
**that** at least one electrical parameter with the mechanical change of
outer conductive layer (21) is variable.

4. Detection device (10) according to one of the preceding claims,
**characterized in**
**that** the at least one planar antenna (20) has only one port.

5. Detection device (10) according to one of claims 1 to 3,
**characterized in**
**that** the at least one planar antenna (20) has at least two ports, wherein
all ports except one are terminated with a terminator resintance.

6. Detection device (10) according to claim 5,
**characterized in**
**that** at least two ports are connected to a measuring / transmitting system.

7. Detection device (10) according to one of the preceding claims,
**characterized in**
**that** the detection device (10) has a plurality of planar antennas (20), wherein the plurality of planar antennas (20) are combined as an array.

## Revendications

1. Dispositif de détection (10) pour la détection d'objets de débris spatiaux dans l'espace, dans lequel l'impact d'un objet de débris spatiaux est détectable sur le dispositif de détection (10), dans lequel le dispositif de détection (10) a une structure en sandwich de deux couches conductrices (21, 23) séparées par une couche non conductrice (22),
dans lequel des tensions électriques peut être appliqué aux deux couches conductrices (21, 23) et au moins la couche conductrice externe (21) est mécaniquement modifiable par l'impact d'un objet de débris spatial, dans lequel par le changement mécanique d'au moins la couche conductrice externe au moins un de leurs paramètres électriques changé,
dans lequel ce changement est mesurable et de ce changement l'impact un objet de débris spatiaux peut être detectable, **caractérisé en ce que** le dispositif de détection (10) a au moins un antenne plane (20), dans laquelle l'antenne plane (20) a sur sa surface la structure en sandwich de deux couches conductrices (21, 23) séparées par la couche non conductrice (22).

2. Dispositif de détection (10) selon la revendication 1,
**caractérisé en ce**
**qu'**au moins la couche conductrice externe (21) peut être déformable par l'impact d'un objet de débris spatial.

3. dispositif de détection (10) selon la revendication 1 ou 2,
**caractérisé en ce**
**qu'**au moins un paramètre électrique peut être variable avec le changement mécanique de la couche conductrice externe (21).

4. Dispositif de détection (10) selon l'une des revendications précédentes,
**caractérisé en ce**
**que** l'au moins une antenne plane (20) a un seul port.

5. Dispositif de détection (10) selon l'une des revendications 1 à 3,
**caractérisé en ce**
**que** l'au moins une antenne plane (20) comporte au moins deux ports, dans lequel tous les ports sauf un sont terminés par un résistance terminal.

6. Dispositif de détection (10) selon la revendication 5,
**caractérisé en ce**
**que** au moins deux ports sont connectés à un système de mesure / transmission.

7. Dispositif de détection (10) selon l'une des revendications précédentes,
**caractérisé en ce**
**que** le dispositif de détection (10) comporte une pluralité d'antennes planes (20), dans lesquelles le une pluralité d'antennes planes (20) sont combinées en un tableau (array).
